# EUROPÄISCHE PATENTSCHRIFT

(11) **EP 3 484 718 B1**
(45) Veröffentlichungstag und Bekanntmachung des Hinweises auf die Patenterteilung: **23.09.2020**
(21) Anmeldenummer: 17742645.9
(22) Anmeldetag: 05.07.2017
(51) Int. Cl.: B43L 19/00, C09D 9/00, C09D 9/02, C09D 9/04

(54) **RADIERER**
ERASER
EFFACEUR

(30) Priorität: 12.07.2016 DE 102016008559
(43) Veröffentlichungstag der Anmeldung: 22.05.2019
(73) Patentinhaber: STAEDTLER Mars GmbH & Co. KG, 90427 Nürnberg (DE)
(72) Erfinder: THIES, Andreas, 91090 Effeltrich (DE)
(86) Internationale Anmeldenummer: PCT/EP2017/000795
(87) Internationale Veröffentlichungsnummer: WO 2018/010835

(56) Entgegenhaltungen:
- WO-A1-2009/118261
- CN-A- 104 419 104
- GB-A- 2 505 341
- JP-A- 2007 169 350
- JP-A- 2011 110 894
- US-A1- 2011 124 778

## Beschreibung

Die Erfindung betrifft einen Radierer gemäß Hauptanspruch.

Radierer zum Entfernen von Abstrichen von Schreib-, Mal- und/oder Zeichengeräte sind prinzipiell aus dem Stand der Technik bekannt.

Weich-PVC-Systeme für Radiergummis sind seit den 1960er Jahren als bekannt anzusehen. Sie bestehen in der Regel aus Polyvinylchlorid (PVC) als Grundpolymer/Bindemittel, das mit Füllstoff gestreckt wird und einem Weichmacher zur Plastifizierung des Bindemittels. Darüber hinaus können noch weitere Bestandteile wie beispielsweise Farbmittel, funktionale Additive wie Lösungsmittel zur Erreichung spezieller Radiereigenschaften hinzugefügt werden. Bei derartigen Radierern wurde die Weichmacherkomponente über die Jahre hin immer wieder aufgrund physiologischer Anforderungen ausgetauscht. Die Herstellung derartiger PVC-Radierer erfolgt in der Regel über eine Verpastung der Komponenten mit angeschlossener Gelierung und Formgebung im Extruder mittels Wärmezufuhr.
Nachteilig ist es hierbei anzusehen, dass derartige Radierer teuer in der Herstellung sind, da die Weichmacherkomponente aufgrund ihres hohen Rohstoffpreises eine entscheidende Komponente bei den Produktkosten darstellt.

Allgemein kann festgehalten werden, dass eingesetzte Weichmacher physiologisch unbedenklich eingestuft sein müssen.
Weiter erfüllen verschiedene bis dato anderweitig eingesetzten Weichmacher nicht die technischen Eigenschaften, um gute Extrudierbarkeit, leichte und gute Verpastungsfähigkeit, befriedigende Radiereigenschaften und erforderliche Weichheit sicherzustellen.
Zudem hat sich gezeigt, dass viele bisher in Radierern eingesetzte Weichmacher stark zur Migration neigen.

So ist aus dem Stand der Technik die DE 31 31 457 C2 bekannt, die Radierer mit PVC als Bindemittel und diversen Weichmachern beschreibt.
Als nachteilig ist es anzusehen, dass die eingesetzten Weichmacher teilweise als Phthalate vorliegen, die als gesundheitsgefährdend eingestuft sind.
Die alternativ als Weichmacher genannten Paraffinöle führen zu signifikanten Nachteilen was die Radierfähigkeit betrifft. Die Abstriche werden beim Radieren verschmiert.

Weiter sind aus der JP 2011110894 A**,** GB 2505341 A und US 2011/124778 A1 Radierer bekannt.
JP 2011110894 A beschreibt einen Radierer, bestehend mindestens aus PVC, Weichmacher und anorganischen Füllsoffen, der zur Lösung der Aufgabe sehr hart ausgeführt ist.
Der Radierer gemäß GB 2505341 A beinhaltet PVC und ein Gemisch aus Weichmachern, mit dem Ziel eine verbesserte Radierfähigkeit zu generieren.
Die US 2011/124778 A1 beschreibt einen recyclierbaren Radierer auf der Basis von Elastomeren.
Nachteilig ist es bei vorstehend beschriebenen Radierern anzusehen, dass in den Zusammensetzungen eine starke Migration des bzw. der Weichmacher aufweisen.

Aus der WO 2009/118261 A1**,** der JP 2007169350 A und der CN 104419104A ist technologischen Hintergrund/Stand der Technik bekannt, wie beispielsweise eine allgemeine Abhandlung von Weichmachern auf Basis von Polyolestern, sowie ein Verfahren zur dessen Herstellung in der WO 2009/118261 A1**.**
Die JP 2007169350 A weist auf eine Zusammensetzung von Bindemittel, Weichmacher und Holzmehl als zugesetzten Füllstoff hin.

**Aufgabe** der Erfindung ist es daher einen Radierer zu schaffen, der kostengünstig hergestellt werden kann, der eine geringe Migration der Weichmacherbestandteile aufweist und zudem eine gute Radierbarkeit an den Tag legt.

Diese Aufgabe, einen Radierer zum Entfernen von Abstrichen von Schreib-, Mal- und/oder Zeichengeräten zu schaffen, der mindestens aus mindestens einem Bindemittel und mindestens einem Weichmacher besteht, wird mit den Merkmalen des Anspruchs 1 gelöst.
Bevorzugte Ausführungsformen und vorteilhafte Weiterbildungen sind in den ergänzenden Ansprüchen umfasst.

Es hat sich in überraschender Weise gezeigt, dass durch den Einsatz von Polyolester als Weichmacherkomponente die Aufgabe gelöst wird.

Durch den Einsatz von Polyolester als Weichmacher in Bindemittel- oder Bindemittelgemischen ist sowohl die Pastenherstellung in gewohnter Weise möglich, als auch die daran angeschlossene Extrusion.
Zum anderen hat es sich in überraschender Weise gezeigt, dass die Radiereigenschaften und damit erzielte Radierergebnisse vergleichbar mit denen von teureren Weichmachern sind.

Unter Radierbarkeit bzw. Radierfähigkeit wird im Sinne der Erfindung die weitgehende Entfernung von Bleistiftabstrichen auf Medien verstanden, wobei die Resteinfärbung des Mediums ein Maß für die Radierleistung darstellt.
Des Weiteren ist der große Vorteil beim Einsatz von Polyolester darin zu sehen, dass die Migration geringer als bei Weichmachern nach dem Stand der Technik ist, wie beispielsweise bei Acetyltributylcitrat (ATBC).
Zudem ist die Härte des Radierers durch Variation des Weichmachergehaltes leicht und genau anpass- bzw. einstellbar.

Ein weiterer großer Vorteil ist darin zu sehen, dass durch den Einsatz von Polyolester als Weichmacher der Radierer sehr günstig in der Herstellung liegt.

Mit den nachfolgenden Rahmenbeispielen wird die Zusammensetzung des erfindungsgemäßen Radierers näher dargestellt.

**Rahmenbeispiel 1**

| | |
|---|---|
| Bindemittel | 20 - 60 Gew.% |
| Polyolester als Weichmacher | 20 - 60 Gew. % |
| Füllstoffe | mehr als 0 - 60 Gew.% |
| Additive | 0 - 10 Gew.% |

**Rahmenbeispiel 2 - bevorzugte Ausführung**

| | |
|---|---|
| Bindemittel | 30 - 55 Gew.% |
| Polyolester als Weichmacher | 30 - 55 Gew. % |
| Füllstoffe | mehr als 0 - 50 Gew.% |
| Additive | 0 - 8 Gew.% |

Der erfindungsgemäße Radierer weist als das mindestens eine **Bindemittel** Polyvinylchlorid (PVC), Polyamid (PA), Polyurethan (PU), Polyolefine (PO), Kautschuk, Polyvinylacetat (PVAc), Polymere aus der Gruppe der Methacrylate (MA) oder Mischung dieser Bindemittel, sogenannte Polymerblends auf.

Als MA seien beispielhaft Polyalkylmethacrylat (PAMA), Polymethylmethylacrylat (PMMA), Polybuthylmethacrylat (PBMA), Polyethylmethacrylat (PEMA) und Polypropylenmezhacralat (PPMA).
Es hat sich in überraschender Weise gezeigt, dass mit den oben aufgeführten Bindemitteln, alleine oder Mischungen der Bindemittel, in Kombination mit Polyolester die gestellte Aufgabe gelöst werden kann.
Das bevorzugt eingesetzte Bindemittel ist PVC, da mit diesem Bindemittel die besten Ergebnisse erzielt werden, um die gestellte Aufgabe zu lösen, insbesondere die Radierfähigkeit und Migration. Zudem ist PVC eines der billigsten Polymere, die am Markt erhältlich sind.

Als **Füllstoffe** können Kreide (Calciumcarbonat), mineralische Verbindungen wie Bimsmehl, Kaolin, Glaspulver, Ton und/oder Talkum eingesetzt werden. Alternativ kann der Radierer als Füllstoffe organische Füllstoffe aufweisen. Beispielhaft seien hierfür Holzmehl, Kernmehle und/oder daraus abgeleitete Produkte genannt.

**Sonstige Zusätze** bzw. Additive können als Farbmittel, Wachse, Öle, Stabilisatoren, Emulgatoren, Lösemittel und/oder abrasive Zuschlagstoffe sein. Die Farbmittel können als Farbstoffe und/oder Pigmente vorliegen.

Die Erfindung soll nachfolgend durch folgende Rezepturbeispiele näher dargestellt werden.

**Rezepturbeispiel 1**

| | |
|---|---|
| PVC | 33,3 Gew. % |
| Polyolester | 33,3 Gew. % |
| Kaolin | 33,3 Gew. % |

**Rezepturbeispiel 2**

| | |
|---|---|
| PVC | 30,0 Gew. % |
| Polyolester | 33,0 Gew. % |
| Titandioxid als Farbmittel | 1,0 Gew.% |
| Kreide als Füllstoff | Rest |

**Rezepturbeispiel 3**

| | |
|---|---|
| PMMA | 28,0 Gew. % |
| Polyolester | 39,0 Gew. % |
| Calciumcarbonat als Füllstoff | Rest |

**Rezepturbeispiel 4:**

| | |
|---|---|
| PVC | 30,0 Gew. % |
| Polyurethan (PU) | 10,0 Gew.% |
| Polyolester | 30,0 Gew. % |
| Titandioxid als Farbmittel | 1,0 Gew.% |
| Kreide als Füllstoff | Rest |

Hergestellt kann ein derartiger Radierer beispielsweise in folgender Weise werden.

### Herstellungsbeispiel

In einem Dissolver werden das PVC-Pulver, der Weichmacher und ggf. eingesetzte Zusätze zu einem homogenen Plastisol vermischt.

Das dabei erhaltene Plastisol wird mittels Doppelschneckenextruder geliert und über eine Düse zu einem endlosen Strang geformt.

Nach einem Kühlbad wird der Radierstrang auf die gewünschte Länge geschnitten und ggf. bedruckt und verpackt.

## Patentansprüche

1. **Radierer** zum Entfernen von Abstrichen von Schreib-, Mal- und/ oder Zeichengeräten mindestens bestehend aus mindestens einem Bindemittel und mindestens einem Weichmacher,
**dadurch gekennzeichnet,**
**dass** der mindestens eine Weichmacher als Polyolester ausgebildet ist, **dass** der Radierer als Füllstoffe organische Füllstoffe aufweist **und dass** die organischen Füllstoffe Holzmehl, Kernmehle und/oder daraus abgeleitete Produkte sind.

2. **Radierer** nach Anspruch 1,
**dadurch gekennzeichnet,**
**dass** der Radierer Polyolester in einer Menge von 20 bis 60 Gew. % aufweist.

3. **Radierer** nach Anspruch 1,
**dadurch gekennzeichnet,**
**dass** der Radierer als Bindemittel Polyvinylchlorid (PVC), Polyamid (PA), Polyurethan (PU), Polyolefine (PO), Kautschuk, Polyvinylacetat (PVAc), Polymere aus der Gruppe der Methacrylate (MA) oder Mischung dieser Bindemittel aufweist.

4. **Radierer** nach einem der vorhergehenden Ansprüche,
**dadurch gekennzeichnet,**
**dass** sich der Radierer aus
| | |
|---|---|
| PVC als Bindemittel | 20 - 60 Gew.% |
| Polyolester als Weichmacher | 20 - 60 Gew. % |
| Füllstoffe | mehr als 0 - 60 Gew.% |
| sonstige Zusätze zusammensetzt. | 0 - 10 Gew.% |

5. **Radierer** nach einem der vorhergehenden Ansprüche,
**dadurch gekennzeichnet,**
**dass** der Radierer als Füllstoffe Kreide (Calciumcarbonat), mineralische Verbindungen wie Bimsmehl, Kaolin, Glaspulver, Ton und/oder Talkum aufweist.

6. **Radierer** nach einem der vorhergehenden Ansprüche,
**dadurch gekennzeichnet,**
**dass** der Radierer als sonstige Zusätze/additive Farbmittel, Wachse, Öle, Emulgatoren, Stabilisatoren, Lösemittel und/oder abrasive Zuschlagstoffe aufweist.

## Claims

1. Eraser for removal of smears of writing, painting and/or drawing instruments at least consisting of at least one binder and at least one softener,
**characterised in that**
the at least one softener is formed as polyolester,
the eraser comprises, as fillers, organic fillers and
the organic fillers are wood flour, kernel flour and/or products derived therefrom.

2. Eraser according to claim 1,
**characterised in that**
the eraser comprises polyolester in a quantity of 20 to 60 weight %.

3. Eraser according to claim 1,
**characterised in that**
the eraser comprises as binder polyvinylchloride (PVC), polyamide (PA), polyurethane (PU), polyolefines (PO), caotchouc, polyvinylacetate (PVAc), polymers from the group of methacrylates (MA) or a mixture of these binders.

4. Eraser according to any one of the preceding claim,
**characterised in that**
the eraser is composed of
| | |
|---|---|
| PVC as binder | 20 - 60 weight % |
| polyolester as softener | 20 - 60 weight % |
| fillers | more than 0 - 60 weight % |
| other additives | 0 - 10 weight % |

5. Eraser according to any one of the preceding claims,
**characterised in that**
the eraser comprises, as fillers, chalk (calcium carbonate), mineral compounds such as pumice flour, kaolin, glass powder, clay and/or talcum.

6. Eraser according to any one of the preceding claims,
**characterised in that**
the eraser has, as other additives, colorants, waxes, oils, emulsifiers, stabilisers, solvents and/or abrasive additive materials.

## Revendications

1. Effaceur dévolu à l'élimination de traces d'ustensiles d'écriture, de peinture et/ou de dessin, au moins composé d'au moins un liant et d'au moins un plastifiant,
**caractérisé par le fait**
**que** le plastifiant à présence minimale est constitué d'ester de polyol,
**que** ledit effaceur renferme des substances de charge organiques en tant que substances de charge
et **que** lesdites substances de charge organiques sont de la farine de bois, des farines de noyaux et/ou des produits dérivés de ces dernières.

2. Effaceur selon la revendication 1,
**caractérisé par le fait**
**que** ledit effaceur renferme de l'ester de polyol en une quantité de 20 à 60 % en poids.

3. Effaceur selon la revendication 1,
**caractérisé par le fait**
**que** ledit effaceur renferme, en tant que liant, du polychlorure de vinyle (PVC), un polyamide (PA), du polyuréthane (PU), des polyoléfines (PO), du caoutchouc, du polyacétate de vinyle (PVAc), des polymères du groupe des méthacrylates (MA), ou un mélange de ces liants.

4. Effaceur selon l'une des revendications précédentes,
**caractérisé par le fait**
**que** ledit effaceur se compose
| | |
|---|---|
| de PVC en tant que liant | 20-60 % en poids |
| d'ester de polyol en tant que plastifiant | 20-60 % en poids |
| de substances de charge | plus de 0-60 % en poids |
| d'autres adjuvants | 0 - 10 % en poids. |

5. Effaceur selon l'une des revendications précédentes,
**caractérisé par le fait**
**que** ledit effaceur renferme, en tant que substances de charge, de la craie (carbonate de calcium), des composés minéraux tels que la farine de pierre ponce, le kaolin, la poudre de verre, l'argile et/ou le talc.

6. Effaceur selon l'une des revendications précédentes,
**caractérisé par le fait**
**que** ledit effaceur renferme, en tant qu'autres adjuvants/additifs, des colorants, des cires, des huiles, des émulsifiants, des stabilisateurs, des solvants et/ou des substances additionnelles abrasives.
